# EUROPÄISCHE PATENTSCHRIFT

(11) **EP 2 161 427 B1**
(45) Veröffentlichungstag und Bekanntmachung des Hinweises auf die Patenterteilung: **23.03.2011**
(21) Anmeldenummer: 09162366.0
(22) Anmeldetag: 10.06.2009
(51) Int. Cl.: F02B 25/04, F02D 23/02, F02B 61/04

(54) **Verfahren zum Betreiben eines längsgespülten Zweitakt-Grossdieselmotors**
Method for operating a longitudinally scavenged two-stroke large diesel engine
Procédé de fonctionnement d'un grand moteur diesel à deux temps et à balayage en longueur

(30) Priorität: 03.09.2008 EP 08163602
(43) Veröffentlichungstag der Anmeldung: 10.03.2010
(73) Patentinhaber: Wärtsilä Schweiz AG, 8401 Winterthur (CH)
(72) Erfinder: Häni, Thomas, 8406, Winterthur (CH)
(74) Vertreter: Sulzer Management AG

(56) Entgegenhaltungen:
- EP-A- 1 956 210
- JP-A- 63 192 914
- JP-A- 2003 129 891
- US-A- 3 174 275

## Beschreibung

Die Erfindung betrifft ein Verfahren zum Betreiben eines längsgespülten Zweitakt-Grossdieselmotors gemäss dem Oberbegriff von Anspruch 1.

Zur Leistungssteigerung von Hubkolbenbrennkraftmaschinen, wie zum Beispiel von Zweitakt-Grossdieselmotoren für Schiffe oder für stationäre Anlagen zur Erzeugung elektrischer Energie, wird nach einem Verbrennungstakt die Frischluft mittels eines Abgasturboladers unter erhöhtem Druck in den Brennraum eines Zylinders eingebracht. Dabei kann ein Teil der thermischen Energie der Abgase ausgenutzt werden, in dem die heissen Abgase aus dem Verbrennungsvorgang im Zylinderbrennraum durch Öffnen eines Auslassventils der Aufladegruppe zugeführt werden. Die Aufladegruppe besteht im wesentlichen aus einer Turbine, die durch die unter Druck in die Aufladegruppe eintretenden heissen Abgase angetrieben wird. Die Turbine treibt ihrerseits einen Verdichter an, wodurch Frischluft angesaugt und verdichtet wird. Dem Verdichter mit Turbine, im weiteren als Turbolader oder Abgasturbolader bezeichnet, ist ein sogenannter Diffusor, ein Ladeluftkühler, ein Wasserabscheider und ein Einlassreceiver nachgeschaltet, von wo aus die komprimierte Frischluft, auch als Ladeluft oder Spülluft bezeichnet, schliesslich in die einzelnen Brennräume der Zylinder des Grossdieselmotors eingespeist wird. Durch den Einsatz einer solchen Aufladegruppe kann somit die Frischluftzufuhr erhöht und die Effizienz des Verbrennungsvorgangs im Brennraum des Zylinders gesteigert werden.

Durch hohe Brennstoffpreise werden Dieselbrennkraftmaschinen, insbesondere bei Frachtschiffen, oft bei Teillast betrieben, um Brennstoff einzusparen. Der Begriff Teillast bedeutet eine Motorenleistung unterhalb der maximalen Motorenleistung. Bei Zweitakt- Grossdieselmotoren mit einem Abgasturbolader steigt bei einer Teillast von typischerweise 30 bis 50% der maximalen Motorenleistung der Brennstoffverbrauch infolge einer schlechteren Zylinderspülung aufgrund eines tieferen Spülluftdrucks. Zudem kann ein längerer Betrieb einer solchen Dieselbrennkraftmaschine im entsprechenden Teillastbereich deren Funktionsfähigkeit beeinträchtigen.

Um den Wirkungsgrad von Zweitakt-Grossdieselmotoren im Teillastbereich zu verbessern, kann der Spülluftdruck auf bekannte Weise auf einen möglichst hohen Wert erhöht werden. Dazu kann beispielsweise der Querschnitt eines Düsenrings einer vor der Eintrittsfläche der Abgase in die Turbine des Abgasturboladers angeordneten Düse entsprechend verkleinert werden, wie beispielsweise in EP-A-1 956 210 beschrieben. Eine weitere Möglichkeit zur Erhöhung des Spülluftdrucks besteht in der Verwendung eines Turboladers mit variabler Turbinengeometrie.

Die Erhöhung des Spülluftdrucks auf einen möglichst hohen Wert kann jedoch die Funktionsfähigkeit des Abgasturboladers in einem höheren Bereich der Motorenleistung beeinträchtigen, oder kann auch zu einer mechanischen und/oder thermischen Überlastung des Dieselmotors führen.

Alle Methoden zur Erhöhung des Spülluftdrucks bei geringer Teillast des Dieselmotors führen zu höheren Stickstoffoxid (NOₓ) Abgaswerten. Um die Abgasnormen einzuhalten, muss somit der NOₓ-Ausstoss in anderen Lastbereichen des Dieselmotors gesenkt werden.

Aufgabe vorliegender Erfindung ist die Bereitstellung eines Verfahrens zum Betreiben eines längsgespülten Zweitakt-Grossdieselmotors, welches einen hohen Wirkungsgrad auch im Teillastbereich des Motors gewährleistet, die Funktionssicherheit des Dieselmotors und des Abgasturboladers nicht beeinträchtigt, und die NOₓ Emissionen über den ganzen Motorenleistungsbereich gesehen auf einem akzeptablen Niveau hält.

Die Aufgabe vorliegender Erfindung wird durch ein Verfahren mit den Merkmalen von Anspruch 1 gelöst. Bevorzugte Ausführungsformen des erfindungsgemässen Verfahrens sind in den abhängigen Ansprüchen beschrieben.

Das erfindungsgemässe Verfahren dient dem Betreiben eines längsgespülten Zweitakt-Grossdieselmotors. Der Zweitakt-Grossdieselmotor weist an einem Einlassbereich eines jeden Zylinders zur Zuführung einer vorgegebenen Spülluftmenge Spülschlitze auf. Zudem weist jeder Zylinder einen Zylinderdeckel und zumindest ein Auslassventil zum Ausstoss der Verbrennungsgase auf. Beim erfindungsgemässen Verfahren wird eine unter einem Umgebungsdruck P₀ bereitstehende Frischluft von einem Abgasturbolader angesaugt und dem Zylinder als Spülluft unter einem vorgegebenen Ladeluftdruck P_{L} über die Spülschlitze zugeführt, so dass im Zylinder die eingebrachte Luft verdichtet wird, in welche dann Brennstoff wie z. B. flüssige Kraftstoffe oder Gas eingespritzt wird und anschliessend verbrennt, so dass aus der Luft und dem Kraftstoff Verbrennungsgas hergestellt wird. Erfindungswesentlich ist, dass der in Abhängigkeit der Motorenleistung oder der Last des Dieselmotors bis zu einer vorgegebenen Motorenleistung L_{S} stetig ansteigende Spülluftdruck P_{L} bei der vorgegebenen Motorenleistung L_{S} eine sprunghafte Reduktion um 0.2 bis 1 bar erfährt bevor der Spülluftdruck P_{L} wieder in Abhängigkeit der Motorenleistung L stetig ansteigt. Die vorgegebene Motorenleistung L_{S} liegt bevorzugt in einem oberen Leistungsbereich, insbesondere im obersten Viertel des maximalen Leistungsbereichs des Dieselmotors. Das oberste Viertel des maximalen Leistungsbereichs betrifft dabei eine Motorenleistung zwischen 75% und 100% der maximalen Motorenleistung, wobei die maximale Motorenleistung auch mit L_{100%} bezeichnet wird.

Die Begriffe Motorenleistung und Motorlast werden als gleichwertige Begriffe verwendet. Im weiteren werden auch die Begriffe Ladeluftdruck und Spülluftdruck gleichwertig verwendet.

Bevorzugt wird die sprunghafte Reduktion des Ladeluftdrucks P_{L} in einem Motorenleistungsbereich zwischen 75% und 90% durchgeführt. Besonders bevorzugt geschieht die sprunghafte Änderung des Ladeluftdrucks zwischen 83 und 87 % der Motorlast.

Der sprunghafte Druckabfall des Ladeluftdrucks P_{L} beträgt bevorzugt zwischen 0.2 und 0.7 bar, wobei der sprunghafte Druckabfall ganz besonders bevorzugt zwischen 0.2 und 0.6 bar beträgt.

Weiter bevorzugt steigt der Ladeluftdruck in Abhängigkeit der Motorenleistung vor und nach der sprunghaften Reduktion stetig an, wobei die Abhängigkeit ausserhalb des Drucksprungs bevorzugt im wesentlichen linear mit der Motorlast ansteigt.

Der Ladeluftdruck ist gegenüber einem Standartbetriebsverfahren allgemein höher und beträgt bei 40% Motorenlast bevorzugt zwischen 1.8 und 2.5 bar. Bei den Spülluftdruckwerten handelt es sich um einen Absolutdruck. Die Druckdifferenz zum Umgebungsdruck, unter der die angesaugte Frischluft steht, ist dabei in Bezug auf die zuvor genannten Werte jeweils um die Höhe des Umgebungsdrucks kleiner.

Bevorzugt beträgt der im wesentlichen lineare Anstieg des Ladeluftdrucks P_{L} in einem Motorenleistungsbereich unterhalb der vorgegebenen Motorenleistung L_{S}, bei der die sprunghafte Reduktion des Ladeluftdrucks stattfindet, in Abhängigkeit von der Motorenleistung zwischen 0.035 und 0.045 bar/% Motorenleistung, und insbesondere zwischen 0.040 und 0.041 bar/% Motorenleistung. In einem Motorenleistungsbereich oberhalb der vorgegebenen Motorenleistung L_{S}, bei der die sprunghafte Reduktion des Ladeluftdrucks P_{L} stattfindet, bis zur maximalen Motorenleistung beträgt der im wesentlichen lineare Anstieg des Ladeluftdrucks in Abhängigkeit von der Motorenleistung zwischen 0.040 und 0.045 bar/% Motorenleistung und speziell bevorzugt zwischen 0.041 und 0.043 bar/% Motorenleistung.

Die sprunghafte Reduktion des Ladeluftdrucks P_{L} kann in einer oder mehrerer aufeinanderfolgender Stufen erfolgen, wobei eine einzige Stufe bevorzugt wird.

In einer bevorzugten Ausführungsform des erfindungsgemässen Verfahrens wird der Spülluftdruck P_{L} in einem unteren Bereich der Motorenleistung, d.h. im Bereich von 0 bis 65% der maximalen Motorenleistung, bei einem gegenüber einem Standardbetriebsverfahren erhöhten Spülluftdruck betrieben, wobei diese Erhöhung bei 40% Motorenleistung etwa 0.25 bar und bei 65% Motorenleistung typischerweise 0.4 bar beträgt. Die Öffnung des Auslassventils und das Einspritzen des Brennstoffs erfolgt in etwa zur gleichen Zeit wie beim Standardbetriebsverfahren. Der höhere Spülluftdruck führt zu einem höheren Verbrennungsdruck und damit auch zu einer höheren NOₓ Emission, wobei jedoch die Verbrennung effizienter abläuft und folglich ein tieferer Brennstoffverbrauch resultiert.

Der gegenüber dem Standardverfahren höhere Spülluftdruck nach dem erfindungsgemässen Verfahren kann durch bekannte Druckerhöhungsmittel erreicht werden. Dabei kann entweder ein leistungsstärkerer Abgasturbolader eingesetzt werden, oder es können in der Abgasleitung vor dem Turbolader beispielsweise Blenden zur Erhöhung der Strömungsgeschwindigkeit des Abgases eingesetzt werden, wie beispielsweise in EP-A-1 956 210 beschrieben.

Im Bereich von 65% bis zur vordefinierten Motorenleistung L_{S}, bei der die sprunghafte Reduktion des Spülluftdrucks erfolgt, d.h. bevorzugt bei etwa 85% Motorenleistung, wird im bevorzugten Betriebsverfahren ebenfalls mit einer gegenüber dem Standardverfahren erhöhten Spülluftdruck gefahren, wobei gleichzeitig das Auslassventil gegenüber dem Standardverfahren später geschlossen wird, so dass der Zylinder nach dem Verbrennungsvorgang länger gespült wird, wobei dadurch der Druck im Zylinder beim nächsten Verbrennungszyklus verringert wird. Dadurch wird die Verbrennung weniger effizient, allerdings sinkt auch die Verbrennungstemperatur, so dass dadurch die NOₓ Emission verringert wird. Durch die verzögerte Schliessung des Auslassventils wird somit der Verbrennungsdruck gesenkt, wobei die Schliessung des Auslassventils und die Einspeisung des Brennstoffs derart gewählt werden, dass der Verbrennungsdruck im Zylinder etwa demjenigen des Standardverfahrens entspricht.

Bei einer Motorenleistung von 70% bis 80% der maximalen Leistung wird das Auslassventil gegenüber dem Standardverfahren zwischen 10 und 15° später geschlossen. Die Gradangabe bezieht sich auf den Kurbelwinkel. Dabei entspricht die untere Totpunktposition des Kolbens, bei welcher der von Zylinder, Zylinderdeckel und Kolben begrenzte Brennraum ein maximales Volumen aufweist, einem Kurbelwinkel von 180°, während eine obere Totpunktposition, bei welcher der Brennraum ein minimales Volumen aufweist, mit einem Kurbelwinkel von 0° bzw. 360° identifiziert wird. Da das Auslassventil im Standardverfahren im Bereich von 220°bis 265°(abhängig vom Hub sowie dem Bohrungs- und Kompressionsverhältnis der Zylinder) bezogen auf den Kurbelwinkel geschlossen wird, erfolgt die Schliessung des Auslassventils im vorstehend genannten Motorenleistungsbereich des erfindungsgemässen Verfahrens zwischen 230 und 280°, bevorzugt im Bereich von 260 bis 280°, bezogen auf den Kurbelwinkel.

Im Bereich über 85% Motorenleistung bis zur maximalen Motorenleistung, was einer 100% Motorenleistung entspricht, d.h. in einem Motorenleistungsbereich anschliessend an die vorgegebene Motorenleistung L_{S}, bei der die sprunghafte Reduktion des Spülluftdrucks erfolgt, steigt der Spülluftdruck - ausgehend vom tieferen Niveau, welches nach dem Druckreduktionssprung vorherrscht - wieder stetig mit der Motorenleistung an. In diesem Bereich ist der Spülluftdruck gegenüber dem Standardverfahren immer noch um typischerweise 0.1 bis 0.15 bar höher.

Der Druckreduktionssprung, d.h. die sprunghafte Reduktion des Spülluftdrucks kann beispielsweise mittels einem entsprechend ausgebildeten und steuerbaren Abgasturboladers geschehen, oder kann durch Verwendung einer Bypassleitung über dem turboladerseitigen Bereich des Abgasturboladers bewerkstelligt werden, indem ein in der Bypassleitung vorhandenes Ventil bei der vordefinierten Motorenleistung L_{S}, welche bevorzugt im Bereich 70 bis 90% Motorenleistung, insbesondere bei etwa 85% Motorenleistung liegt, sprunghaft geöffnet wird, wodurch ein Teil des Abgases, vorzugsweise etwa 5% der Abgasmenge, durch den Bypass am Abgasturbolader vorbeigeleitet und direkt dem Auspuff zugeleitet wird. Hierbei sei klargestellt, dass der Bypass bei weiterer Erhöhung der Motorenleistung, d.h. im Bereich von der vordefinierten Motorenleistung L_{S}, bei der der Druckreduktionssprung ausgelöst wird, bis zur maximalen Motorenleistung, offen bleibt.

Eine weitere Möglichkeit zur Durchführung des Druckreduktionssprunges bildet die Verwendung eines Bypasses über den laderseitigen Bereich des Abgasturboladers. Hierbei wird bei Erreichen der vorgegebenen Motorenleistung L_{S} ebenfalls ein Ventil sprunghaft geöffnet, so dass der Abgasturbolader neben der Frischluft auch am Ausgang des Abgasturboladers verdichtete Spülluft ansaugt, wodurch der Spülluftdruck entsprechend gesenkt wird.

Um das erfindungsgemässe Verfahren in Bezug auf Verbrennungstemperatur, Abgase, NOx-Emissionen und Brennstoffverbrauch optimal durchzuführen, sollte der Zweitakt-Grossdieselmotor mit einem elektronisch steuerbaren Auslassventil, einer elektronisch steuerbaren Brennstoffeinspritzung und einer Vorrichtung zur erfindungsgemässen Steuerung des Spülluftdruckes ausgerüstet sein.

Das erfindungsgemässe Verfahren erlaubt die Erhöhung des Wirkungsgrads von längsgespülten Zweitakt-Grossdieselmotoren insbesondere bei Teillastbetrieb, die Einhaltung vorbestimmter Emissionswerte von Stickstoffoxiden über den ganzen Leistungsbereich gesehen, ohne die thermische Belastung des Motors über ein die Funktionssicherheit beeinträchtigendes Mass zu erhöhen und ohne wesentliche bauliche Veränderungen vornehmen zu müssen, so dass auch bestehende Motoren mit dem erfindungsgemässen Verfahren betrieben werden können, bzw. durch einfache Massnahmen umgerüstet werden können.

Die Erfindung wird im Folgenden an Hand nachfolgender Figuren weiter erläutert. Es zeigen:
- Fig. 1: einen Vergleich des Spülluftdrucks P_{L} in Abhängigkeit der Motorenleistung L gemäss einem Standardbetriebsverfahren eines Zweitakt-Grossdieselmotors und dem erfindungsgemässen Verfahren;
- Fig. 2: schematischer Aufbau eines erfindungsgemässen längsgespülten Zweitakt-Grossdieselmotors mit Abgasturbolader System;
- Fig. 3: weitere Ausführung eines erfindungsgemässen längsgespülten Zweitakt-Grossdieselmotors mit Abgasturbolader System;
- Fig. 4: einen Vergleich des Brennstoffverbrauchs BV in Abhängigkeit der Motorenleistung L gemäss einem Standardbetriebsverfahren eines Zweitakt-Grossdieselmotors und dem erfindungsgemässen Verfahren.

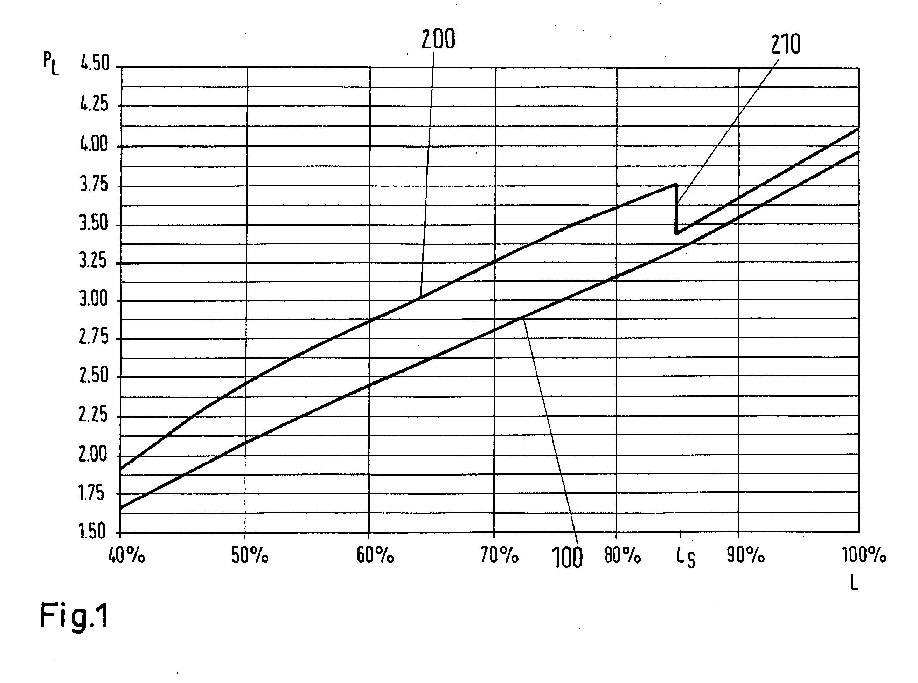

Fig. 1 zeigt einen Vergleich des Spülluftdrucks P in Abhängigkeit der Motorenleistung L gemäss dem Standardbetriebsverfahren eines Zweitakt-Grossdieselmotors und dem erfindungsgemässen Verfahren. Der Spülluftdruck P_{L} in bar ist auf der Ordinate und die Motorenleistung L auf der Abszisse aufgetragen. Die Motorenleistung ist in Prozent der maximalen Motorenleistung angegeben.

Die Kurve 100 in Fig. 1 zeigt den Spülluftdruck P_{L} in Abhängigkeit der Motorenleistung L in einem Standardbetriebsverfahren des längsgespülten Zweitakt-Grossdieselmotors. Dabei steigt der Spülluftdruck P_{L} in Abhängigkeit von der Motorenleistung L stetig an, d.h. es treten keine Sprünge auf. Die Abhängigkeit ist linear, d.h. der Spülluftdruck P_{L} reagiert im ganzen Bereich der Motorenleistung auf eine Veränderung der Motorenleistung stets mit einer dazu proportionalen Änderung. Die Kurve 100 stellt fast eine geradlinige Kurve mit einer Steigung von 0.0375 bar/% Motorenleistung dar, wobei der Spülluftdruck P_{L} oder Ladeluftdruck bei 40% Motorenleistung etwa 1.6875 bar beträgt.

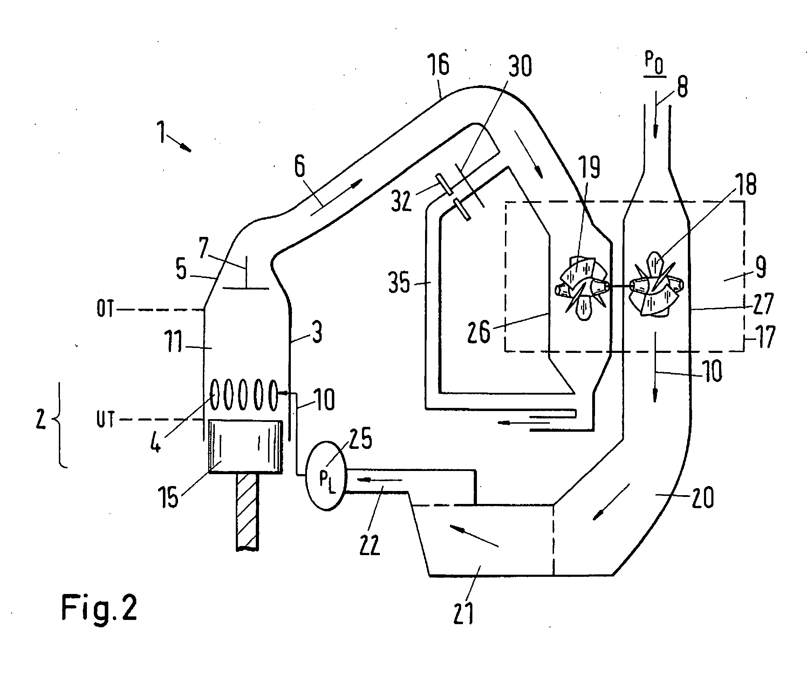

Die Kurve 200 in Fig. 2 zeigt den Spülluftdruck P_{L} in Abhängigkeit der Motorenleistung L nach dem erfindungsgemässen Verfahren. Dabei ist der Spülluftdruck P_{L} gegenüber dem Standardverfahren durchwegs höher. Beim erfindungsgemässen Verfahren liegt der Spülluftdruck P_{L} bei 40% Motorenleistung um 0.25 bar und bei 80% Motorenleistung um 0.4375 bar höher als bei dem in Kurve 100 gezeigten Standardverfahren.

Der Verlauf des Spülluftdrucks P_{L} des erfindungsgemässen Verfahrens steigt unterhalb 85% Motorenleistung stetig in Abhängigkeit von der Motorenleistung L an, weist bei 85% Motorenleistung eine sprunghafte Reduktion des Spülluftdrucks um etwa 0.3125 bar auf und steigt danach wieder stetig in Abhängigkeit der Motorenleistung L an. Unterhalb und oberhalb von 85% Motorenleistung stellt die Abhängigkeit des Spülluftdrucks P_{L} von der Motorenleistung eine lineare Kurve dar, d.h. der Spülluftdruck P_{L} reagiert im ganzen Bereich der Motorenleistung - abgesehen von der Stufe bei der vorgegebenen Motorenleistung L_{S} bei 85% Motorenleistung, bei der der Druckreduktionssprung passiert - auf eine Veränderung der Motorenleistung L stets mit einer dazu proportionalen Änderung.

Fig. 2 zeigt in einer schematischen Darstellung zur Erläuterung des Zusammenwirkens der unterschiedlichen Komponenten den prinzipiellen Aufbau eines Abgasturbolader-Systems eines erfindungsgemässen Grossdieselmotors, der als Zweitakt-Grossdieselmotor mit Längsspülung ausgebildet ist und der im folgenden gesamthaft mit dem Bezugszeichen 1 bezeichnet wird.

Der Grossdieselmotor 1 umfasst in an sich bekannter Weise üblicherweise mehrere Zylinder 3 mit einem in einem Zylinderdeckel 5 angeordneten Auslassventil 7, in welchem Zylinder 3 ein Kolben 15 zwischen einem unteren Totpunkt UT und einem oberen Totpunkt OT entlang einer Lauffläche hin- und her bewegbar angeordnet ist. Die Zylinderwände des Zylinders 3 mit Zylinderdeckel 5 und der Kolben 15 begrenzen in bekannter Weise einen Brennraum des Zylinders 3. In einem Einlassbereich 2 des Zylinders 3 sind mehrere Spülluftöffnungen 4 vorgesehen, die als Spülschlitze 4 ausgeführt sind. Je nach Stellung des Kolbens 15 werden die Spülschlitze 4 von diesem überdeckt oder freigegeben. Durch die Spülluftöffnungen 4 kann die auch als Ladeluft 10 bezeichnete Spülluft 10 in den Brennraum des Zylinders 3 einströmen. Durch das im Zylinderdeckel 5 angeordnete Auslassventil 7 strömen die bei der Verbrennung entstandenen Verbrennungsgase 6 durch eine Abgasleitung 16, die sich an das Auslassventil 7 anschliesst, in einen Abgasturbolader 9.

Der Abgasturbolader 9 umfasst einen Verdichter mit Verdichterlaufrad 18 zum Verdichten von Frischluft 8, sowie eine Turbine mit einem Turbinenlaufrad 19. Das Verdichterlaufrad 18 ist durch eine Welle drehfest mit dem Turbinenlaufrad 19 verbunden, so dass das Verdichterlaufrads 18 durch das Turbinenlaufrad 19 angetrieben wird. Die Turbine und der Verdichter sind in einem Gehäuse 17 angeordnet und bilden den Abgasturbolader 9, der im vorliegenden Fall verdichterseitig als Radialverdichter ausgebildet ist. Die Turbine wird durch die einströmenden heissen Verbrennungsgase 6 aus dem Brennraum des Zylinders 3 angetrieben.

Zum Beladen des Brennraums des Zylinders 3 mit Spülluft 10 wird durch das Verdichterlaufrad 18 über einen Ansaugstutzen Frischluft 8 angesaugt und im Abgasturbolader 9 auf einen erhöhten Druck komprimiert, der etwas höher ist, als der letztlich im Zylinder 3 aufgebaute Ladeluftdruck P_{L}. Aus dem Abgasturbolader 9 gelangt die komprimierte Frischluft 8 als Spülluft 10 durch den nachgeschalteten Diffusor 20 und den Ladeluftkühler 21 über den Wasserabscheider 22 in einen Einlassreceiver 25, von dem aus die komprimierte Ladeluft 10 schliesslich als Spülluft 10 durch die Spülschlitze 4 unter dem erhöhtem Ladeluftdruck P_{L} in den Brennraum des Zylinders 3 gelangt.

Das in Fig. 2 gezeigte Ausführungsbeispiel weist weiter eine Bypassleitung 35 auf, die den Abgasturbolader 9 an dessen Turbinenseite 26 überbrückt. Die Bypassleitung weist ein Ventil 30 und eine Drossel 32 auf. Das Ventil kann dabei zwei Positionen einnehmen, nämlich offen oder geschlossen. Die Drossel kann beispielsweise durch einen Düsenring gebildet werden und dient der Verkleinerung des Querschnitts der Bypassleitung. Dabei wird die Querschnittverringerung bevorzugt konstant gehalten. Der Querschnitt der Bypassleitung ist derart gewählt, dass bei offenem Ventil 3 bis 8%, bevorzugt 4 bis 6% und insbesondere ca. 5% der in der Abgasleitung 16 geführten Verbrennungsgase 6 durch die Bypassleitung geführt werden. Die durch die Bypassleitung geleiteten Verbrennungsgase werden am Abgasturbolader 9 vorbeigeführt und können somit nicht zur Verdichtung der Ladeluft 10 beitragen.

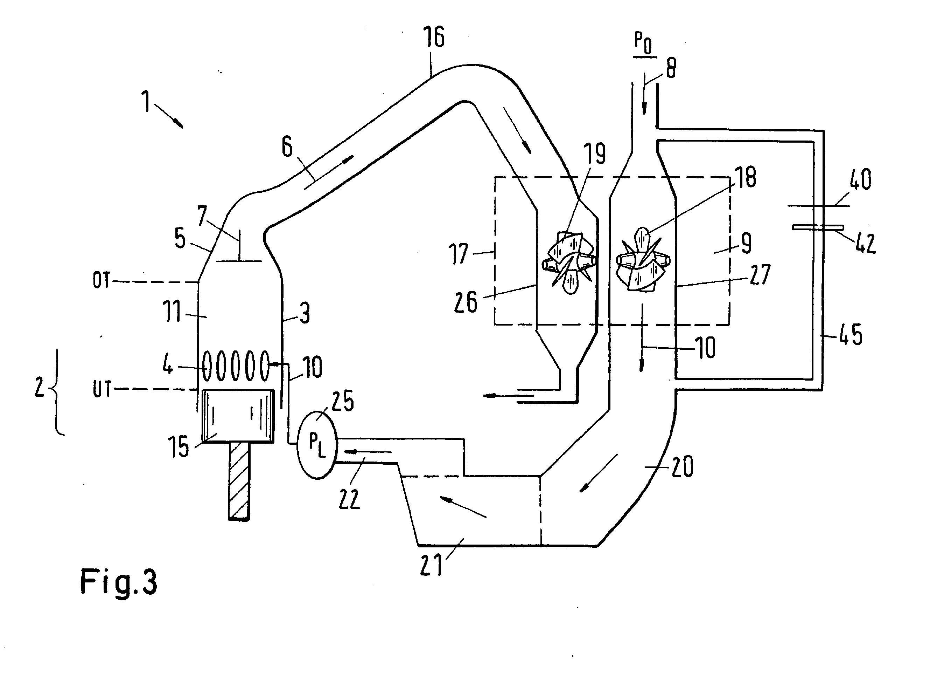

Fig. 3 zeigt schematisch eine weitere Ausführung eines erfindungsgemässen Grossdieselmotors 1. Dabei ist eine Bypassleitung 45 auf der Verdichterseite 27 angebracht und überbrückt damit den Verdichter des Abgasturboladers 9. Die Bypassleitung 45 weist ein Ventil 40 und eine Drossel 42 auf, welche dieselbe Ausbildung und dieselben Funktionen wie für Ventil 30 und Drossel 32 in der in Fig. 2 gezeigten Ausführungsform aufweisen. Die Funktion der weiteren in Fig. 3 gezeigten Elemente ist dieselbe wie für die korrespondierenden, in Fig. 2 gezeigten Elemente beschrieben.

Bei geöffnetem Ventil 40 wird vom Verdichterlaufrad 18 auch Luft aus der Bypassleitung 45 angesogen, wodurch die Verdichterleistung und damit auch der Ladeluftdruck entsprechend abnimmt. Die Drossel 42 kann beispielsweise durch einen Düsenring gebildet werden und dient der Verkleinerung des Querschnitts der Bypassleitung 45. Die Querschnittverringerung ist bevorzugt konstant. Der Querschnitt der Bypassleitung 45 und die Drossel 42 sind derart ausgebildet, dass durch das Öffnen des Ventils 40 der Spülluftdruck am Ausgang des Abgasturboladers 9 um 0.2 bis 1 bar, bevorzugt zwischen 0.2 und 0.7 bar abgesenkt wird.

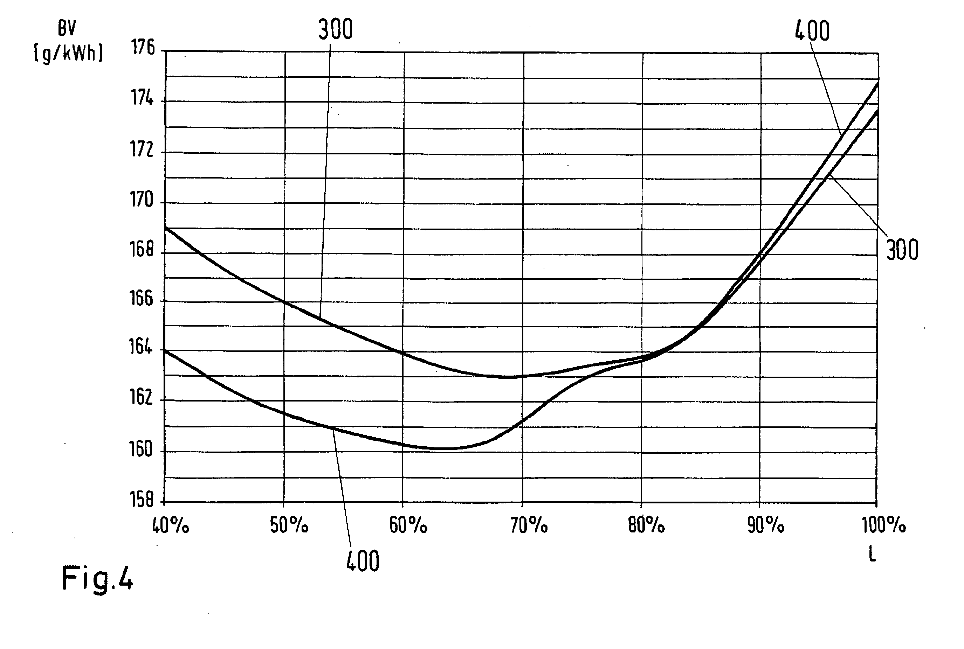

Fig. 4 zeigt einen Vergleich des Brennstoffverbrauchs BV in Abhängigkeit der Motorenleistung L gemäss einem Standardbetriebsverfahren eines Zweitakt-Grossdieselmotors und dem erfindungsgemässen Verfahren. Der gezeigte Brennstoffverbrauch in g/kWh entspricht dem BSFC-Wert (BSFC=Break Specific Fuel Consumption), welcher mittels Brennstoffverbrauch in g/h (Gramm pro Stunde) pro Motorenleistung in kW berechnet wird. Dabei wird die Motorenleistung durch w x Tq berechnet, wobei w die Drehzahl in rpm und Tq das Drehmoment in Nm bedeutet.

Der Brennstoffverbrauch BV ist in Fig. 4 auf der Ordinate und die Motorenleistung L auf der Abszisse aufgetragen. Die Motorenleistung ist in Prozent der maximalen Motorenleistung angegeben.

Die Kurve 400 in Fig. 4 zeigt den Brennstoffverbrauch in Abhängigkeit der Motorenleistung gemäss dem erfindungsgemässen Verfahren, während Kurve 300 den Brennstoffverbrauch gemäss dem Standardbetriebsverfahren zeigt. As Fig. 4 geht klar hervor, dass der Brennstoffverbrauch mit dem erfindungsgemässen Verfahren insbesondere in einem Teillastbereich unterhalb ca. 75% der maximalen Motorenleistung wesentlich geringer ausfällt, verglichen mit dem Standardbetriebsverfahren.

## Patentansprüche

1. Verfahren zum Betreiben eines längsgespülten Zweitakt-Grossdieselmotors (1) enthaltend wenigstens einen Zylinder, wobei an einem Einlassbereich (2) jedes Zylinders (3) zur Zuführung einer vorgegebenen Spülluftmenge Spülschlitze (4) vorhanden sind und an einem Zylinderdeckel (5) jedes Zylinders (3) zum Ausstoss von Verbrennungsgasen (6) ein Auslassventil (7) vorhanden ist, bei welchem Verfahren eine unter einem Umgebungsdruck (Po) bereitstehende Frischluft (8) von einem Abgasturbolader (9) angesaugt wird und dem Zylinder (3) als Spülluft (10) unter einem vorgegebenen Spülluftdruck (P_{L}) über die Spülschlitze (4) zugeführt wird, wobei im Zylinder (3) die eingebrachte Luft verdichtet wird, in welche dann Brennstoff eingespritzt wird und anschliessend verbrennt, und die beim Verbrennungsvorgang gebildeten Verbrennungsgase (6) über eine Abgasleitung (16) in die Turbine des Abgasturboladers (9) geleitet werden,
**dadurch gekennzeichnet, dass**
der in Abhängigkeit der Motorenleistung (L) des Dieselmotors bis zu einer vorgegebenen Motorenleistung L_{S} stetig ansteigende Spülluftdruck (P_{L}) bei der vorgegebenen Motorenleistung L_{S} eine sprunghafte Reduktion um 0.2 bis 1 bar erfährt bevor der Spülluftdruck (P_{L}) wieder in Abhängigkeit der Motorenleistung (L) stetig ansteigt.

2. Verfahren nach Anspruch 1, **dadurch gekennzeichnet, dass** die sprunghafte Reduktion des Spülluftdrucks (P_{L}) in einem Bereich zwischen 75% und 90%, insbesondere zwischen 83% und 87% der maximalen Motorenleistung (L_{100%}) durchgeführt wird.

3. Verfahren nach Anspruch 1 oder 2, **dadurch gekennzeichnet, dass** der sprunghafte Druckabfall des Spülluftdrucks (P_{L}) zwischen 0.2 und 0.7 bar beträgt.

4. Verfahren nach einem der Ansprüche 1 bis 3, **dadurch gekennzeichnet, dass** der Spülluftdruck (P_{L}) vor und nach der sprunghaften Reduktion im wesentlichen linear mit der Motorenleistung (L) ansteigt.

5. Verfahren nach Anspruch 4, **dadurch gekennzeichnet, dass** der Spülluftdruck bei 40% Motorenleistung zwischen 1.8 und 2 bar Absolutdruck beträgt, und der im wesentlichen lineare Anstieg des Spülluftdrucks im Bereich von 40% Motorenleistung bis unterhalb der sprunghaften Reduktion des Spülluftdrucks in Abhängigkeit von der Motorenleistung zwischen 0.035 und 0.045 bar/% Motorenleistung, insbesondere zwischen 0.040 und 0.041 bar/% Motorenleistung beträgt, und der im wesentlichen lineare Anstieg des Spülluftdrucks oberhalb der sprunghaften Reduktion des Spülluftdrucks bis zur maximalen Motorenleistung (L_{100%}) in Abhängigkeit von der Motorenleistung zwischen 0.040 und 0.045 bar/% Motorenleistung, insbesondere zwischen 0.041 und 0.043 bar/% Motorenleistung beträgt.

6. Verfahren nach einem der Ansprüche 1 bis 5, **dadurch gekennzeichnet, dass** die sprunghafte Reduktion des Spülluftdrucks in einer oder mehreren Stufen bei der vorgegebenen Motorenleistung L_{S} erfolgt.

7. Verfahren nach einem der Ansprüche 1 bis 6, **dadurch gekennzeichnet, dass** der Spülluftdruck P_{L} in einem Bereich von 0% bis zur vordefinierten Motorenleistung L_{S}, bei der die sprunghafte Reduktion des Spülluftdrucks P_{L} erfolgt, gegenüber dem Standardbetriebsverfahren erhöht wird, wobei diese Erhöhung bei 40% der maximalen Motorenleistung zwischen 0.2 und 0.3 bar und bei 65% der maximalen Motorenleistung zwischen 0.35 und 0.45 bar beträgt.

8. Verfahren nach Anspruch 7, **dadurch gekennzeichnet, dass** Im Bereich von 65% der maximalen Motorenleistung bis zur vordefinierten Motorenleistung L_{S}, bei der die sprunghafte Reduktion des Spülluftdrucks erfolgt, das Auslassventil zwischen 230° und 290° und insbesondere im Bereich von 260° bis 280°, bezogen auf den Kurbelwinkel, geschlossen wird.

9. Verfahren nach Anspruch 7 oder 8, **dadurch gekennzeichnet, dass** im Bereich von der vordefinierten Motorenleistung L_{S}, bei der die sprunghafte Reduktion des Spülluftdrucks P_{L} erfolgt bis zur maximalen Motorenleistung, der Spülluftdruck P_{L}, ausgehend vom Spülluftdruck-Niveau, welches nach dem Druckreduktionssprung vorherrscht, stetig mit der Motorenleistung L ansteigt.

## Claims

1. A method for the operation of a longitudinally scavenged two stroke large diesel engine (1) having at least one cylinder, wherein scavenging slits (4) are present at an inlet region (2) of each cylinder (3) for the introduction of a preset amount of scavenging air and an outlet valve (7) is present at a cylinder cover (5) of each cylinder (3) for the expulsion of combustion gases (6), in this method fresh air (8) available at an ambient pressure (Po) is ingested by an exhaust gas turbocharger (9) and is supplied to the cylinder (3) as scavenging air (10) at a preset scavenging air pressure (P_{L}) via the slits (4), wherein the air which is introduced is compressed in the cylinder (3), fuel is then injected into the air and subsequently combusted and the combustion gases (6) formed during the combustion process are fed to a turbine of the exhaust gas turbocharger (9) via an exhaust duct (16),
**characterized in that**
the scavenging air pressure (P_{L}) continuously increases in dependence on the engine power (L) of the diesel engine up to a preset engine power Ls and, at the preset engine power Ls, experiences a step reduction by 0.2 to 1 bar before the scavenging air pressure (P_{L}) again continuously increases in dependence of the engine power (L).

2. A method in accordance with claim 1, **characterized in that** the step reduction of the scavenging air pressure (P_{L}) is carried out in a range between 75 % and 90 % of the maximum engine power, in particular between 83 % and 87 % of the maximum engine power (L_{100%}).

3. A method in accordance with claim 1 or claim 2, **characterized in that** the step reduction in pressure of the scavenging air pressure (P_{L}) is between 0.2 and 0.7 bar.

4. A method in accordance with any one of claims 1 to 3, **characterized in that** the scavenging air pressure (P_{L}) essentially increases linearly with the engine power (L) before and after the step reduction.

5. A method in accordance with claim 4, **characterized in that** the scavenging air pressure is between 1.8 and 2 bar of absolute pressure at 40 % of the engine power and **in that** the essentially linear increase of the scavenging air pressure in dependence on the engine power in the region of 40 % of the engine power up to below the step reduction of the scavenging air pressure is between 0.035 and 0.045 bar/% of the engine power and in particular between 0.04 and 0.041 bar/% of the engine power and **in that** the essentially linear increase of the scavenging air pressure in dependence of the engine power above the step reduction of the scavenging air pressure up to the maximum engine power (L_{100%}) is between 0.040 and 0.045 bar/% of the engine power, in particular between 0.041 and 0.043 bar/% of the engine power.

6. A method in accordance with any one of claims 1 to 5, **characterized in that** the step reduction of the scavenging air pressure is achieved in one or more steps at the preset engine power Ls.

7. A method in accordance with any one of claims 1 to 6, **characterized in that** the scavenging air pressure P_{L} is increased with respect to the standard mode of operation in a region of 0 % of the engine power up to the predefined engine power Ls, at which the step reduction of the scavenging air pressure is achieved, wherein this increase is between 0.2 and 0.3 bar at 40 % of the maximum engine power and between 0.35 and 0.45 bar at 65 % of the maximum engine power.

8. A method in accordance with claim 7 **characterized in that** in a region of 65 % of the maximum engine power up to the predefined engine power Ls, at which the step reduction of the scavenging air pressure is achieved, the outlet valve is closed in a range between 230° and 290° with respect to the crank angle and in particular in a range from 260° to 280° with respect to the crank angle.

9. A method in accordance with claim 7 or claim 8, **characterized in that** in the range from the predefined engine power Ls, at which the step reduction of the scavenging air pressure P_{L} is achieved, up to the maximum engine power, the scavenging air pressure continuously increases with the engine power L starting from the scavenging air pressure level which prevailed after the step reduction in pressure.

## Revendications

1. Procédé pour le fonctionnement d'un gros moteur diesel (1) à deux temps à balayage longitudinal, comportant au moins un cylindre, des fentes de balayage (4) étant agencées dans une zone d'admission (2) de chaque cylindre (3) pour l'admission d'une quantité prédéfinie d'air de balayage, et une soupape d'échappement (7) destinée à expulser les gaz de combustion (6) étant disposée au niveau d'une culasse (5) de chaque cylindre (3), dans lequel procédé l'air frais (8) mis à disposition sous une pression ambiante (P₀) est aspiré par un turbocompresseur (9) et est acheminé via les fentes de balayage (4) vers le cylindre (3) en tant qu'air de balayage (10) sous une pression (P_{L}) prédéfinie, l'air introduit dans le cylindre (3) étant comprimé, puis un carburant est injecté dans cet air et est amené ensuite à combustion, et les gaz de combustion (6) formés par le processus de combustion sont guidés via une conduite de gaz d'échappement (16) dans la turbine du turbocompresseur (9),
**caractérisé en ce que**
la pression (P_{L}) de l'air de balayage, qui augmente en continu en fonction de la puissance (L) du moteur diesel jusqu'à une puissance L_{S} prédéfinie du moteur, subit, lorsque la puissance L_{S} prédéfinie du moteur est atteinte, une brusque diminution de 0,2 à 1 bar avant que la pression (P_{L}) de l'air de balayage augmente à nouveau en continu en fonction de la puissance (L) du moteur.

2. Procédé selon la revendication 1, **caractérisé en ce que** la brusque diminution de la pression (P_{L}) de l'air de balayage se produit dans une plage entre 75 % et 90 %, en particulier entre 83 % et 87% de la puissance maximale (L_{100%}) du moteur.

3. Procédé selon la revendication 1 ou 2, **caractérisé en ce que** la brusque chute de la pression (P_{L}) de l'air de balayage est comprise entre 0,2 et 0,7 bar.

4. Procédé selon l'une quelconque des revendications 1 à 3, **caractérisé en ce que**, avant et après la brusque diminution, la pression (P_{L}) de l'air de balayage augmente sensiblement linéairement avec la puissance (L) du moteur.

5. Procédé selon la revendication 4, **caractérisé en ce que** la pression de l'air de balayage à 40 % de la puissance du moteur est comprise entre 1,8 et 2 bar en pression absolue, et l'augmentation sensiblement linéaire de la pression de l'air de balayage dans la plage de 40% de la puissance du moteur jusqu'au-dessous de la brusque diminution de la pression de l'air de balayage est comprise en fonction de la puissance du moteur entre 0,035 et 0,045 bar/% de puissance du moteur, en particulier entre 0,040 et 0,041 bar/% de puissance du moteur, et l'augmentation sensiblement linéaire de la pression de l'air de balayage, au-dessus de la brusque diminution de la pression de l'air de balayage, jusqu'à la puissance maximale (L_{100%}) du moteur est comprise en fonction de la puissance du moteur entre 0,040 et 0,045 bar/% de puissance du moteur, en particulier entre 0,041 et 0,043 bar/% de puissance du moteur.

6. Procédé selon l'une quelconque des revendications 1 à 5, **caractérisé en ce que** la brusque diminution de la pression de l'air de balayage en une ou plusieurs étapes se produit en présence de la puissance L_{S} prédéfinie du moteur.

7. Procédé selon l'une quelconque des revendications 1 à 6, **caractérisé en ce que** la pression (P_{L}) de l'air de balayage, dans une plage de 0 % jusqu'à la puissance L_{S} prédéfinie du moteur, à laquelle se produit la brusque diminution de la pression (P_{L}) de l'air de balayage, est augmentée par rapport au procédé de fonctionnement standard, cette augmentation étant comprise à 40% de la puissance maximale du moteur entre 0,2 et 0,3 bar, et à 65 % de la puissance maximale du moteur entre 0,35 et 0,45 bar.

8. Procédé selon la revendication 7, **caractérisé en ce que** dans la plage de 65 % de la puissance maximale du moteur jusqu'à la puissance L_{S} prédéfinie du moteur, à laquelle se produit la brusque diminution de la pression de l'air de balayage, la soupape d'échappement est fermée entre 230° et 290° et en particulier dans la plage de 260° à 280°, par rapport à l'angle de vilebrequin.

9. Procédé selon la revendication 7 ou 8, **caractérisé en ce que** dans la plage de la puissance L_{S} prédéfinie du moteur, à laquelle se produit la brusque diminution de la pression (P_{L}) de l'air de balayage, jusqu'à la puissance maximale du moteur, la pression (P_{L}) de l'air de balayage augmente en continu avec la puissance L du moteur à partir du niveau de pression de l'air de balayage qui règne après la brusque diminution de pression.
